# EUROPEAN PATENT APPLICATION

(11) **EP 1 862 491 A1**
(43) Date of publication of application: **05.12.2007**
(21) Application number: 06729492.6
(22) Date of filing: 20.03.2006
(51) Int. Cl.: C08G 81/02

(54) **THERMOPLASTIC RESIN, METHOD FOR PRODUCING SAME AND MOLDING MATERIAL**

(30) Priority: 22.03.2005 JP 2005082208
(71) Applicant: ZEON CORPORATION, Tokyo 100-8246 (JP)
(72) Inventor: TSUNOGAE, Yasuo, yoda-ku, Tokyo, 1008246 (JP); HAYANO, Shigetaka, yoda-ku, Tokyo, 1008246 (JP); ISHIGURO, Atsushi, yoda-ku, Tokyo, 1008246 (JP)
(74) Representative: Albrecht, Thomas
(86) International application number: PCT/JP2006/305524
(87) International publication number: WO 2006/101069

(57) **Abstract**

A thermoplastic resin comprising a block copolymer or a graft copolymer possessing (A) a crystalline hydrogenated norbornene ring-opening polymer unit and (B) a non-crystalline polymer unit having a glass transition temperature of 40 to 300°C; A method for producing thermoplastic resin comprising hydrogenating a block copolymer or a graft copolymer possessing a norbornene ring-opening polymer unit (C) and a polymer unit (D) which is converted into the above-mentioned non-crystalline polymer unit (B) after hydrogenation, in the presence of a hydrogenation catalyst; and a molding material comprising the thermoplastic resin are provided. The thermoplastic resin of the present invention excels in transparency, heat resistance, and mechanical strength.

## Description

### TECHNICAL FIELD

The present invention relates to a thermoplastic resin comprising a block copolymer or a graft copolymer having a crystalline unit and a non-crystalline unit in the molecule, a method for producing the same, and a molding material containing the thermoplastic resin.

### BACKGROUND ART

Non-crystalline thermoplastic resins such as a polystyrene resin, an acrylic resin, and a cycloolefin resin are widely used as transparent plastic materials. Although these non-crystalline thermoplastic resins are excellent in moldability by injection molding, blow molding, or the like, their mechanical strength and heat resistance are insufficient.

As other non-crystalline thermoplastic resins, non-patent documents 1 to 4 propose a metathesis ring-opening block copolymer of norbomenes obtained by using a living ring-opening metathesis polymerization catalyst. Although the copolymers disclosed in these documents have a controlled structure and a controlled molecular weight and excel in transparency, their mechanical strength and heat resistance are insufficient.

Block copolymers and graft copolymers comprising a non-crystalline thermoplastic resin to which crystalline polymer units are introduced in order to increase the mechanical strength of the non-crystalline thermoplastic resin have been proposed. For example, non-patent document 5 describes a hydrogenated product of a block copolymer of cyclooctadiene and methyl methacrylate. However, since the hydrogenate disclosed in this document has a block copolymer structure of ethylene and methyl methacrylate, and has a crystal part with a polyethylene structure, its mechanical strength and heat resistance are insufficient.

On the other hand, non-patent document 6 describes that a hydrogenated product of a norbomene ring-opening polymer has crystallinity. However, the polymer described in this document has a problem of poor transparency.

Non-patent document 7 proposes a hydrogenated product of a ring-opening metathesis block copolymer made from norbomene and ethylidenenorbomene. This document describes that the hydrogenated norbomene ring-opening polymer unit is crystalline, but the hydrogenated ethylidenenorbomene ring-opening polymer unit is not crystalline. However, the hydrogenated non-crystalline ethylidenenorbomene ring-opening polymer unit is a rubbery polymer of which the glass transition temperature is not more than room temperature. For this reason, the polymer does not have sufficient heat resistance.

Non-patent document 1: Macromolecules, Vol. 24, pp. 4495-4502 (1991)
Non-patent document 2: Journal of American Chemical Society, Vol. 118, pp. 784-790 (1996)
Non-patent document 3: Macromolecules, Vol. 35, pp. 1985-1987 (2002)
Non-patent document 4: Macromolecules, Vol. 30, pp. 4791-4798 (1997)
Non-patent document 5: Journal of American Chemical Society, Vol. 122, pp. 12872-12873 (2000)
Non-patent document 6: Polymeric Materials Science and Engineering, Vol. 76, p. 61 (1997)
Non-patent document 7: Macromolecules, Vol. 37, pp. 7278-7284 (2004)

As mentioned above, a thermoplastic resin having a crystalline unit bonded with a non-crystalline thermoplastic resin and exhibiting excellent performance in all of transparency, heat resistance, and mechanical strength has not been obtained.

The present invention has been achieved in view of the above problems and has an object of providing a novel thermoplastic resin having a crystalline unit bonded with a non-crystalline thermoplastic resin, and exhibiting excellent performance in all of transparency, heat resistance, and mechanical strength, a method for producing such a thermoplastic resin, and a molding material comprising such a thermoplastic resin.

### DISCLOSURE OF THE INVENTION

As a result of extensive studies in order to achieve the above-mentioned object, the inventors of the present invention have found that a thermoplastic resin comprising a block copolymer or a graft copolymer possessing a crystalline hydrogenated norbomene ring-opening polymer unit and a non-crystalline polymer unit having a specific glass transition temperature has high transparency, and exhibits excellent performance in heat resistance and mechanical strength. This finding has led to the completion of the present invention.

Accordingly, a first aspect of the present invention provides a thermoplastic resin comprising a block copolymer or a graft copolymer possessing (A) a crystalline hydrogenated norbomene ring-opening polymer unit and (B) a non-crystalline polymer unit having a glass transition temperature of 40 to 300°C.
In the thermoplastic resin of the present invention, the non-crystalline polymer unit (B) is preferably (B1) a unit obtainable by ring-opening polymerization of a norbomene monomer having three or more rings and hydrogenating the resulting polymer, (B2) an aromatic vinyl polymer unit or a unit obtainable by hydrogenating the aromatic ring thereof, or (B3) an acrylate polymer unit.

A second aspect of the present invention provides a method for producing the thermoplastic resin of the present invention comprising hydrogenating a block copolymer or a graft copolymer possessing (C) a norbomene ring-opening polymer unit and (D) a polymer unit which can be converted into the non-crystalline polymer unit (B) after hydrogenation, in the presence of a hydrogenation catalyst.
In the method of the present invention, the norbomene ring-opening polymer unit (C) is preferably produced by living ring-opening metathesis polymerization of norbomene or a mixture of norbomene and a monomer copolymerizable with the norbomene by ring-opening polymerization.
A third aspect of the present invention provides a molding material comprising the thermoplastic resin of the present invention.

### BEST MODE FOR CARRYING OUT THE INVENTION

The present invention will be described in detail below.

### 1) Thermoplastic resin and method for producing the same

The thermoplastic resin of the present invention comprises a block copolymer or a graft copolymer (hereinafter referred to from time to time collectively as "copolymer of the present invention") which has (A) a crystalline hydrogenated norbomene ring-opening polymer unit (hereinafter referred to from time to time as "unit (A)") and (B) a non-crystalline polymer unit having a glass transition temperature of 40 to 300°C (hereinafter referred to from time to time as "unit (B)").

The copolymer of the present invention is a block copolymer or a graft copolymer.
The block copolymer may be either a di-block copolymer or a multi-block copolymer of the unit (A) and unit (B).
The graft copolymer may be either a copolymer in which two or more units (B) are grafted to a unit (A), or *vice versa.*
It is particularly preferable that the thermoplastic resin of the present invention be a di-block copolymer or a multi-block copolymer of the unit (A) and unit (B) in view of excellent mechanical strength and ease of production.

The polymerization ratio by weight of the unit (A) and the unit (B) in the copolymer of the present invention is usually from 1:99 to 50:50, preferably from 2:98 to 45:55, and more preferably from 3:97 to 40:60. If the amount of the unit (A) is too small, the heat resistance may be insufficient; and if too large, transparency may be reduced.

Although not particularly limited, the weight average molecular weight (Mw) of the copolymer of the present invention is preferably from 5,000 to 1,000,000, more preferably from 10,000 to 800,000, still more preferably from 15,000 to 800,000, and most preferably from 20,000 to 500,000. If the Mw is smaller than the above range, the mechanical strength may be reduced. If the Mw is larger than the above range, the polymer solution may have too high viscosity to be handled with ease. Mw in the present invention is a value as polystyrene standard measured by gel-permeation chromatography.

The crystalline hydrogenated norbomene ring-opening polymer unit (A) is a chain of a plurality of recurring units, obtainable by ring-opening metathesis polymerization of norbomene and hydrogenation of the resulting polymer. The hydrogenated unit (A) has crystallinity.

A norbomene ring-opening polymer unit (C) is obtained by ring-opening metathesis polymerization of norbornene. The hydrogenated product obtained by hydrogenating a norbomene homopolymer is usually crystalline irrespective of the polymerization method and the hydrogenation conditions.

The norbomene ring-opening polymer unit (C) may be a copolymer of norbomene and other monomers insofar as the resulting hydrogenated product obtained by hydrogenating the copolymer is crystalline.

As the other monomers copolymerizable with norbornene, norbomene monomers other than norbomene and monocyclic monoolefins or monocyclic diolefins can be given.

The norbomene monomers are compounds having a norbomene ring structure. As examples of bicyclic norbomenes having no ring other than the norbomene ring in a molecule, norbomenes having an alkyl group such as 5-methylnorbornene and 5-ethylnorbornene; norbomenes having an alkenyl group such as 5-methylidenenorbomene, 5-ethylidenenorbomene, and 5-vinylnorbornene; norbomenes having an oxygen-containing group such as 5-methoxycarbonylnorbomene, 5-ethoxycarbonylnorbornene, 5-methyl-5-methoxycarbonylnorbornene, norbomenyl-2-methylpropionate, 5-hydroxymethylnorbornene, 5,6-di(hydroxymethyl)norbornene, 5,6-dicaboxynorbornene, and 5-methoxycarbonyl-6-carboxynorbomene; and norbomenes having a nitrogen-containing group such as 5-cyanonorbomene can be given. Norbornene monomers having three or more rings mentioned later can also be given.

As specific examples of the monocyclic monoolefins, cyclopentene, cyclohexene, cycloheptene, and cyclooctene can be given. As specific examples of the monocyclic diolefins, cyclohexadiene, methylcyclohexadiene, and cyclooctadiene can be given.

Any known metathesis polymerization catalysts can be used as the polymerization catalyst for the ring-opening metathesis polymerization. As the metathesis polymerization catalyst, a compound of a transition metal in Group 4 to Group 8 of the periodic table can be used. Specific examples that can be given include metathesis polymerization catalysts in which a halide, oxyhalide, alkoxyhalide, alkoxide, acetylacetonate, or carbonyl complex of a transition metal in Group 4 to Group 8 of the periodic table is used in combination with an alkylating agent or a Lewis acid which functions as a promoter, a metal carbene complex catalyst of a transition metal in Group 4 to Group 8 of the periodic table, and a metalacyclobutane complex catalyst of a transition metal in Group 4 to Group 8 of the periodic table.

Among these, the living ring-opening metathesis polymerization catalyst is preferable. A block copolymer or a graft copolymer can be easily produced by bonding the later-described unit (B) or unit (D) to the polymer terminal using a living ring-opening metathesis polymerization catalyst.

As examples of the living ring-opening metathesis polymerization catalyst, a metal carbene complex catalyst of molybdenum or tungsten, which is called a Scrock-type catalyst, a ruthenium carbene complex catalyst, which is called a Grubbs-type catalyst, and a titanacyclobutane complex catalyst, can be given.

As preferable examples of the Scrock-type catalyst, 2,6-diisopropylphenylimide neophylidene molybdenum(VI) bis(t-butoxide) and 2,6-diisopropylphenylimide neophylidene molybdenum(VI) bis(hexafluoro-t-butoxide) can be given. As preferable examples of the Grubbs-type catalyst, bis(tricyclohexylphosphine)benzylidene ruthenium(IV) dichloride and the like can be given.

The polymerization reaction is initiated by mixing the above-mentioned monomers with a metathesis polymerization catalyst. Although there are no specific limitations to the polymerization temperature, the reaction is usually carried out at a temperature from -30°C to +200°C, and preferably from 0°C to +180°C. The polymerization reaction time is usually from one minute to 100 hours.

The polymerization reaction is usually carried out in an organic solvent. Although any organic solvents which can dissolve or disperse the resulting norbomene ring-opening polymer unit (C) and crystalline hydrogenated norbomene ring-opening polymer unit (A) under specific conditions without affecting the polymerization reaction can be used without particular limitations, solvents commonly used in industries are preferable.

As specific examples of such a solvent, aliphatic hydrocarbons such as pentane, hexane, and heptane; alicyclic hydrocarbons such as cyclopentane, cyclohexane, methylcyclohexane, dimethylcyclohexane, ethylcyclohexane, decahydronaphthalene, bicycloheptane, tricyclodecane, hexahydroindene, and cyclooctane; aromatic hydrocarbons such as benzene, toluene, and xylene; halogen-containing aliphatic solvents such as dichloromethane, chloroform, and 1,2-dichloroethane; halogen-containing aromatic solvents such as chlorobenzene and dichlorobenzene; nitrogen-containing solvents such as nitromethane, nitrobenzene, and acetonitrile; aliphatic ethers such as diethyl ether and tetrahydrofuran; and aromatic ethers such as anisole and phenetole can be given. Among these, industrially common aromatic hydrocarbons, aliphatic hydrocarbons, alicyclic hydrocarbons, aliphatic ethers, and aromatic ethers are preferable, with more preferable solvents being aromatic hydrocarbons, aliphatic hydrocarbons, and alicyclic hydrocarbons.

When the polymerization reaction is carried out in a solvent, the monomer concentration is preferably 1 to 50 wt%, more preferably 2 to 45 wt%, and particularly preferably 3 to 40 wt% of the total amount of the solvent and monomers. If the monomer concentration is less than 1 wt%, productivity is poor. If more than 50 wt%, the viscosity of the polymer solution obtained by the polymerization is so high that the hydrogenation reaction that follows may be difficult.

A molecular weight adjusting agent may be added to the polymerization reaction system in order to adjust the molecular weight of the norbomene ring-opening polymer unit (C). As examples of the molecular weight adjusting agent, α-olefins such as 1-butene, 1-pentene, 1-hexene, and 1-octene; aromatic vinyl compounds such as styrene and vinyltoluene; oxygen-containing vinyl compounds such as ethyl vinyl ether, isobutyl vinyl ether, allyl glycidyl ether, allyl acetate, allyl alcohol, and glycidyl methacrylate; halogen-containing vinyl compounds such as allyl chloride; nitrogen-containing vinyl compounds such as acrylamide; nonconjugated dienes such as 1,4-pentadiene, 1,4-hexadiene, 1,5-hexadiene, 1,6-heptadiene, 2-methyl-1,4-pentadiene, and 2,5-dimethyl-1,5-hexadiene; conjugated dienes such as 1,3-butadiene, 2-methyl-1,3-butadiene, 1,3-pentadiene, and 1,3-hexadiene can be given. The amount of the molecular weight adjusting agent can be optionally selected according to a desired molecular weight from a range of 0.1 to 10 mol% of the monomers.

The unit (A) can be obtained by hydrogenating the resulting norbomene ring-opening polymer unit (C) in the presence of a hydrogenation catalyst. Any hydrogenation catalyst commonly used for hydrogenating olefin compounds can be used without specific limitations. The following compounds can be given as examples.

As homogeneous catalysts, a catalyst system consisting of combination of a transition metal compound and an alkali metal compound, for example, cobalt acetate and triethylaluminum, nickel acetylacetonate and triisobutylaluminum, titanocene dichloride and n-butyllithium, zirconocene dichloride and sec-butyllithium, tetrabutoxytitanate and dimethylmagnesium, and the like can be given. A noble metal complex catalyst such as dichlorobis(triphenylphosphine)palladium, chlorohydridecarbonyltris(triphenylphosphine)ruthenium, and chlorotris(triphenylphosphine)rhodium can also be given.

As unhomogeneous catalysts, nickel, palladium, platinum, rhodium, and ruthenium, or solid catalysts with these metals supported on a carrier such as carbon, silica, diatomaceous earth, alumina, or titania, for example, nickel on silica, nickel on diatomaceous earth, nickel on alumina, palladium on carbon, palladium on silica, palladium on diatomaceous earth, and palladium on alumina can be given.

The hydrogenation reaction is usually carried out in an inert organic solvent. As examples of such an inert organic solvent, aromatic hydrocarbons such as benzene and toluene; aliphatic hydrocarbons such as pentane and hexane; alicyclic hydrocarbons such as cyclohexane and decahydronaphthalene; and ethers such as tetrahydrofuran and ethylene glycol dimethyl ether can be given, Usually, the same solvent as the solvent used in the polymerization reaction can be used.

The hydrogenation reaction conditions vary according to the hydrogenation catalyst used. The reaction temperature is usually from -20 to +250°C, preferably from -10 to +220°C, and more preferably from 0 to +200°C. If the reaction temperature is too low, the reaction speed is slow; if too high, side reactions may occur.

The hydrogenation pressure is usually from 0.01 to 20 MPa, preferably from 0.05 to 15 MPa, and more preferably from 0.1 to 10 MPa. If the hydrogen pressure is too low, the reaction speed is slow; if too high, a high pressure reactor must be used.
The reaction time is not specifically limited insofar as a desired hydrogenation rate can be achieved. Usually, the reaction time is from 0.1 to 10 hours.

The unit (A) can be obtained in this manner. Crystallinity of the unit (A) can be confirmed by a peak due to the heat of crystal fusion observed in differential scanning calorimetry (DSC). The melting point (Tm) of the unit (A) varies according to the steric structure, but preferably from 80 to 180°C, and particularly preferably from 100 to 180°C.

The unit (B) is non-crystalline and must have a glass transition temperature (Tg) of 40 to 300°C. Tg of the unit (B) is preferably from 50 to 270°C, and more preferably from 60 to 250°C. If the Tg is too low, the heat resistance is insufficient; if too high, the resin tends to be deteriorated during melt molding. Tg is measured by differential scanning calorimetry (DSC). Since a peak due to a glass transition temperature is usually smaller than the peak due to the heat of crystal fusion in the DSC analysis, Tg may not be observed if the Tg overlaps Tm when the copolymer of the present invention has the unit (A) and unit (B). In such a case, Tg calculated by separately analyzing a homopolymer or a random copolymer having the same structure as the unit (B) by DSC can be regarded as Tg of the unit (B).

The unit (B) has the same structure and composition as the polymer known as a homopolymer or a random copolymer having the Tg of the above range. As specific examples, a unit (B1) obtainable by ring-opening polymerization of a norbornene monomer having three or more rings and hydrogenating the polymer; a unit (B2) which is an aromatic vinyl polymer unit, or obtainable by hydrogenating the aromatic ring thereof; a unit (B3) which is an acrylate polymer unit; and a unit obtainable by ring-opening polymerization of a functional group-containing norbomene monomer having two rings and hydrogenating the polymer can be given. Of these, the unit (B1), the unit (B2), and the unit (B3) are preferable, with the unit (B1) being particularly preferable.

The unit (B1) is obtained by hydrogenating a polymer unit (D1) which is obtained by ring-opening polymerization of a norbomene monomer having three or more rings.

As examples of the norbomene monomer having three or more rings, norbomenes having a hydrocarbon ring not condensing with the norbomene ring such as 5-cyclohexylnorbomene, 5-cyclopentylnorbomene, 5-cyclohexenylnorbomene, 5-cyclopentenylnorbornene, and 5-phenylnorbornene; norbomenes having a heterocyclic structure condensing with the norbornene ring such as norbornene-5,6-dicarboxylic acid anhydride and norbornene-5,6-dicarboxylic acid imide; and monomers having a condensed ring of the norbomene ring and a hydrocarbon ring shown by the following formula (1) or (2) can be given. These norbomene monomers may be used either individually or in combination of two or more.

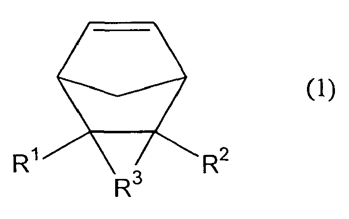

wherein R¹ and R² individually represent a hydrogen atom; a halogen atom; a substituted or unsubstituted hydrocarbon group having 1 to 20 carbon atoms; or a substituent containing a silicon atom, an oxygen atom, or a nitrogen atom; wherein R¹ and R² may bond together to form a ring, and R³ represents a substituted or unsubstituted divalent hydrocarbon group having 1 to 20 carbon atoms.

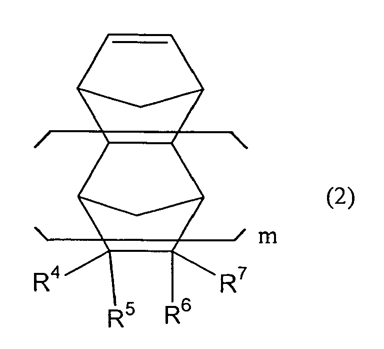

wherein R⁴ to R⁷ individually represent a hydrogen atom; a halogen atom; a substituted or unsubstituted hydrocarbon group having 1 to 20 carbon atoms; or a substituent containing a silicon atom, an oxygen atom, or a nitrogen atom; wherein R⁴ and R⁶ may bond together to form a ring, and m is 1 or 2.

As specific examples of the monomer shown by the above formula (1), dicyclopentadiene, methyldicyclopentadiene, and tricyclo[5.2.1.0^{2,6}]dec-8-ene can be given. Monomers having an aromatic ring such as tetracyclo[9.2.1.0^{2,10}.0^{3,8}]tetradeca-3,5,7,12-tetraene (also called 1,4-methano-1,4,4a,9a-tetrahydro-9H-fluorene) and tetracyclo[10.2.1.0^{2,11}.0^{4,9}]pentadeca-4,6,8,13-tetraene (also called 1,4-methano-1,4,4a,9,9a,10-hexahydroanthracene) can also be given.

As examples of the monomer shown by the above formula (2), tetracyclododecenes which are the compounds of the formula (2) in which m = 1 and hexacycloheptadecenes which are compounds of the formula (2) in which m = 2 can be given.
As specific examples of tetracyclododecenes, tetracyclododecenes unsubstituted or substituted with an alkyl group such as tetracyclododecene, 8-methyltetracyclododecene, 8-ethyltetracyclododecene, 8-cyclohexyltetracyclododecene, and 8-cyclopentyltetracyclododecene; tetracyclododecenes having a double bond outside of the ring such as 8-methylidenetetracyclododecene, 8-ethylidenetetracyclododecene, 8-vinyltetracyclododecene, 8-propenyltetracyclododecene, 8-cyclohexenyltetracyclododecene, and 8-cyclopentenyltetracyclododecene; tetracyclododecenes having an aromatic ring such as 8-phenyltetracyclododecene; tetracyclododecenes having an oxygen-containing substituent such as 8-methoxycarbonyltetracyclododecene, 8-methyl-8-methoxycarbonyltetracyclododecene, 8-hydroxymethyltetracyclododecene, 8-carboxytetracyclododecene, tetracyclododecene-8,9-dicarboxylic acid, and tetracyclododecene-8,9-dicarboxylic acid anhydride; tetracyclododecenes having a nitrogen-containing substituent such as 8-cyanotetracyclododecene and tetracyclododecene-8,9-dicarboxylic acid imide; tetracyclododecenes having a halogen-containing substituent such as 8-chlorotetracyclododecene; and tetracyclododecenes having a silicon-containing substituent such as 8-trimethoxysilyltetracyclododecene can be given.

Any Diels-Alder addition compounds of the above-described tetracyclododecenes and cyclopentadiene can be used as the hexacycloheptadecenes.
These polycyclic norbomene monomers having three or more rings include endo isomers and exo isomers. A mixture of these isomers can be used as the monomer of the present invention.

Hydrogenated products obtained by hydrogenation of the ring-opening polymer of the polycyclic norbomene monomers having three or more rings are usually noncrytalline and has a Tg of the above range.

The unit (D1) may be a copolymer of the above-mentioned polycyclic norbomene monomers having three or more rings and other monomers insofar as the resulting hydrogenated product obtained by hydrogenating the copolymer is non-crystalline and its Tg is within the above-mentioned range. As such other monomers, norbomene and the above monocyclic monoolefins or cyclic diolefins can be given. The amount of the other monomers that can be used is usually 50 wt% or less.

The unit (D1) can be obtained by ring-opening metathesis polymerization of the above monomers. The catalyst, molecular weight adjusting agent, solvent, and the conditions of polymerization reaction used in the ring-opening metathesis polymerization are the same as those of the production method of the unit (C).

The unit (B1) can be obtained by hydrogenating the unit (D1) in the presence of a hydrogenation catalyst. The hydrogenation catalyst and the conditions of the hydrogenation reaction are the same as those of the hydrogenation reaction of the unit (C).

The unit (B2) is a unit of aromatic vinyl polymer obtained by polymerizing an aromatic vinyl monomer (D2), or a unit obtained by hydrogenating the aromatic ring of the aromatic vinyl polymer.

As examples of the aromatic vinyl monomers that can be used, styrene, α-methylstyrene, p-methylstyrene, m-methylstyrene, o-methylstyrene, ethylstyrene, trimethylstyrene, t-butylstyrene, indene, chlorostyrene, bromomethylstyrene, and acetoxymethylstyrene can be given.

The above aromatic vinyl polymer may be a copolymer of the aromatic vinyl monomer and other monomers insofar as the copolymer itself or the resulting hydrogenated product obtained by hydrogenating the copolymer is non-crystalline and its Tg is within the above-mentioned range.

As examples of such other monomers, conjugated dienes such as 1,3-butadiene, isoprene, chloroprene, and 2,3-dimethyl-1,3-butadiene; α,β-unsaturated nitrile compounds such as acrylonitrile and methacrylonitrile; unsaturated carboxylic acids such as acrylic acid, methacrylic acid, and maleic anhydride; and other vinyl monomers such as 1-hydrocarbonylethylene, 2-hydrocarbonylpropene, 1-methylcarbonylethylene, 2-methylcarbonylpropene, and N-phenylmaleimide can be given. Acrylate monomers mentioned later can also be given. Of these, conjugated diene monomers are preferable, with isoprene being particularly preferred. The amount of the other monomers that can be used is usually 50 wt% or less.

There are no specific limitations to the polymerization method for producing the aromatic vinyl polymer. Any of the suspension polymerization, solution polymerization, and bulk polymerization can be used. When the hydrogenation reaction is followed by the polymerization reaction of the aromatic vinyl monomers without isolating the resulting aromatic vinyl polymer, the solution polymerization using an organic solvent is preferable in order to continuously execute the process.

There are no specific limitations to the organic solvent inasmuch as the polymerization is not inhibited by the organic solvent used. Any organic solvents used for producing the norbornene ring-opening polymer unit (C) can be used. The organic solvent is used in an amount to provide a monomer concentration of usually 1 to 40 wt%, preferably 10 to 30 wt%.

There are also no specific limitations to the polymerization method. Any of the radical polymerization method, anionic polymerization method, and cationic polymerization method can be used. Of these, the anionic polymerization method is preferable due to ease of production of a block copolymer or a graft copolymer having the above-mentioned unit (A) or unit (C) bonded to the terminal. As the anionic polymerization method, a method of using an organic alkali metal as a polymerization catalyst is preferable. As desired, a Lewis base may be added in order to obtain a polymer with a narrow molecular weight distribution.

As the organic alkali metal used in the anionic polymerization method, mono-organolithium compounds such as n-butyllithium, sec-butyllithium, t-butyllithium, hexyllithium, phenyllithium, and stilbenelithium; polyfunctional organolithium compounds such as dilithiomethane, 1,4-dilithiobutane, 1,4-dilithio-2-ethylcyclohexane, and 1,3,5-trilithiobenzene; sodium naphthalene; potassium naphthalene; and the like can be used. Of these, organolithium compounds are preferable, with particularly preferable being mono-organolithium compounds. These organic alkali metal compounds may be used either individually or in combination of two or more. The amount of the organic alkali metal compounds is usually from 0.05 to 100 mmol, preferably from 0.10 to 50 mmol, and more preferably from 0.15 to 20 mmol per 100 parts by weight of the monomers.

As examples of the Lewis base, ether compounds such as diethyl ether, dibutyl ether, methyl ethyl ether, dibenzyl ether, and tetrahydrofuran; tertiary amine compounds such as tetramethylethylene diamine, triethylamine, and pyridine; alkyl metal alkoxide compounds such as potassium t-amyl oxide and potassium t-butyl oxide; and phosphine compounds such as triphenylphosphine can be given. These Lewis bases may be used either individually or in combination of two or more. The amount of the Lewis base is usually from 0.001 to 10 mmol, preferably from 0.01 to 5 mmol, and more preferably from 0.1 to 2 mmol of the amount of the organic alkali metal.

The polymerization reaction may be carried out either under isothermal conditions or heat insulating conditions at a temperature usually from -70 to +150°C, and preferably from -50 to +120°C. The polymerization time is usually from 0.01 to 20 hours, and preferably from 0.1 to 10 hours.

The unit (B2) can be obtained by hydrogenating the aromatic ring of the resulting aromatic vinyl polymer, as required. The hydrogenation catalyst and the conditions of the hydrogenation reaction are the same as those of the hydrogenation reaction of the unit (C).

The acrylate polymer unit (B3) is obtained by polymerizing an acrylate monomer. As specific examples of the acrylate monomer, acrylic acid esters such as methyl acrylate, ethyl acrylate, butyl acrylate, and hydroxyethyl acrylate and methacrylic acid esters such as methyl methacrylate, ethyl methacrylate, and butyl methacrylate can be given. These acrylate monomers may be used either individually or in combination of two or more.

The unit (B3) may be a copolymer of the above-mentioned acrylate monomers and another monomer insofar as the polymer is non-crystalline and its Tg is within the above-mentioned range. As specific examples of the other monomers, the above-mentioned aromatic vinyl monomers and any monomers copolymerizable with the aromatic vinyl monomers can be given.

Although any known polymerization method such as a radical polymerization method or an anionic polymerization method can be used for producing the unit (B3), a radical polymerization method, particularly an atom transfer radical polymerization method is preferable. When the atom transfer radical polymerization method is used for producing the unit (B3), a block copolymer or a graft copolymer having the above-mentioned unit (A) or unit (C) bonded to the terminal can be easily produced.

The atom transfer radical polymerization is a polymerization method using an organohalide compound or a halogened sulfonyl compound as an initiator and a metal complex having an element belonging to the Group 8 to Group 11 of the periodic table as a central metal as a catalyst. As the organohalide compound, esters having halogen at the α-position and compounds having halogen in the benzyl position are preferable. As the above-mentioned metal complex, a zero-valent copper complex, a mono-valent copper complex, a divalent ruthenium complex, a divalent iron complex, and a divalent nickel complex are preferable.

The atom transfer radical polymerization is preferably carried out in an organic solvent. There are no specific limitations to the organic solvent inasmuch as the polymerization is not inhibited by the organic solvent used. Any organic solvents used for producing the norbornene ring-opening polymer unit (C) can be used. The organic solvent is used in an amount to provide a monomer concentration of usually from 1 to 40 wt%, and preferably from 10 to 30 wt%. The polymerization reaction temperature is usually from 0 to 200°C, and preferably from 20 to 150°C.

The method for producing the copolymer of the present invention is not particularly limited. A preferable production method comprises hydrogenating a block copolymer or a graft copolymer possessing a norbornene ring-opening polymer unit (C) and a polymer unit (D) which is converted into the above-mentioned non-crystalline polymer unit (B) after hydrogenation, in the presence of a hydrogenation catalyst. A radical addition reaction or a coupling reaction of the unit (A) and unit (B) can also be used for producing the copolymer.

The polymer unit (D) is a unit that can be converted into the above-mentioned non-crystalline polymer unit (B) after hydrogenation. The structure differs according to the type of the unit (B) to be produced. If the structure does not change after hydrogenation, the polymer unit (D) and the polymer unit (B) have the same structure. For example, when the unit (B) is a unit (B1) obtained by ring-opening polymerization of a norbornene monomer having three or more rings and hydrogenating the resulting polymer, the polymer unit (D) is a unit (D1) obtainable by the ring-opening polymerization of the norbornene monomer having three or more rings. When the unit (B) is a unit (B2) which is a unit of an aromatic vinyl polymer, or a unit obtained by hydrogenating the aromatic ring thereof, the polymer unit (D) is an aromatic vinyl polymer unit. When the unit (B) is an acrylate polymer unit (B3), the polymer unit (D) is the same as the unit (B).

As the method for producing a block copolymer having the unit (C) and unit (D), for example, a method of sequentially polymerizing norbornene and a norbornene monomer having three or more rings can be given. Specifically, such a block copolymer can be obtained by alternately adding norbomene and a norbornene monomer having three or more rings to a polymerization system containing an organic solvent and the above-mentioned metathesis polymerization catalyst. In this instance, either a di-block copolymer or a multi-block copolymer can be optionally obtained according to the number of times of alternately adding the monomers. The above-mentioned living ring-opening metathesis polymerization catalyst is particularly preferable as the metathesis polymerization catalyst due to easiness in controlling the structure and molecular weight of the resulting block copolymer.

As another method for producing a block copolymer having the unit (C) and unit (D), a method of using a unit (D) having a carbon-carbon double bond at the molecular chain terminal and polymerizing norbornene in the presence of such a unit (D) can be given. The unit (D) having a carbon-carbon double bond at the molecular chain terminal acts as a chain transfer agent in the polymerization of norbornene, and produces a block copolymer of the unit (C) and the unit (D).

As a method for introducing a carbon-carbon double bond to the molecular chain terminal of the unit (D), for example, a method of producing a unit (D) by the living polymerization using an organolithium compound as a polymerization catalyst, and terminating the polymerization reaction using an alkylene halide can be given. A method of producing the unit (D) by the atom-transfer radical polymerization using an organohalide compound having an alkenyl group as an initiator can also be given. Furthermore, a method of producing the unit (D) by the atom-transfer radical polymerization and terminating the polymerization reaction using an organometal compound having an alkenyl group can be given.

In addition, since the polymer produced by ring-opening metathesis polymerization of a norbornene monomer usually has a carbon-carbon double bond at the molecular chain terminal, a block copolymer can be obtained by polymerizing norbornene in the presence of the unit (D1) obtained in the above method.
In the same manner, it is possible to obtain a block copolymer by polymerizing a norbornene monomer having three or more rings in the presence of the unit (C) having a carbon-carbon double bond at the molecular chain terminal.

A method of terminating the polymerization reaction of norbornene using the unit (D) having a functional group at the molecular chain terminal can also be given. A functional group that can terminate the polymerization reaction of norbornene and couple the produced unit (C) with the unit (D) can be used here. As specific examples of such a functional group, a formyl group, a silyl group, a hydroxyl group, a carboxyl group, an epoxy group, a carbonyl group, an amide group, a vinyl group, and a halogen atom can be given.

As the method for introducing such a functional group into the molecular chain terminal of the unit (D), a method of producing the unit (D) by the living polymerization method and terminating the polymerization reaction using a terminator which has such a functional group can be given. For example, the functional group can be introduced into the molecular chain terminal of the unit (D) by polymerizing styrene using an organolithium compound as a polymerization catalyst and terminating the polymerization reaction using a terminator having a formyl group such as N-formylmorpholine.

Furthermore, a method of polymerizing by adding norbornene and an acrylate monomer to a carbene complex catalyst of ruthenium can be given. If a carbene complex catalyst of ruthenium is used, the ring-opening metathesis polymerization of norbomene and the radical polymerization of an acrylate monomer proceed in parallel to produce a block copolymer of the norbornene and acrylate monomer. Either a method of polymerizing, either of the norbomene monomer or the acrylate monomer first, then adding the other monomer to proceed the polymerization, or a one-pot polymerization method in which both monomers are added and polymerized at the same time may be used. As the carbene complex catalyst of ruthenium to be used, bis(tricyclohexylphosphine)benzylidene ruthenium (IV) dichloride and the like can be given.

As the method for producing the graft copolymer having the unit (C) and unit (D), homopolymerization of a norbomene having the unit (D) on a side chain, and copolymerization of a norbomene having the unit (D) on a side chain with an unsubstituted norbornene can be given.

As the method for introducing the unit (D) onto the norbomene side chain, a method of producing the unit (D) by the living polymerization method and terminating the polymerization reaction using a norbornene having a functional group on the side chain can be given. A functional group that can terminate the polymerization reaction for producing the unit (D) and couple the produced unit (D) with the norbornene can be used here. As specific examples of such a functional group, groups that can react with an anion by a nucleophilic reaction such as a silicon halide, alkoxy carbonyl, carboxylic acid, acid halide, epoxide, ketone, formyl, amide, alkyl halide, and acid anhydride can be given.

The block copolymer or graft copolymer having the unit (C) and unit (D) obtained above is hydrogenated in the presence of a hydrogenation catalyst to obtain the copolymer according to the present invention. The hydrogenation catalyst and the hydrogenation reaction conditions are the same as those of the hydrogenation reaction of the above-mentioned unit (C).

### 2) Molding material

The molding material of the present invention is characterized by containing the thermoplastic resin of the present invention. The molding material of the present invention contains at least one thermoplastic resin of the present invention and may contain commonly known additives as required.

As the additives, a lubricant, a dispersion assistant, a lubricity agent, a heat stabilizer, an antioxidant, a lightstabilizer, an UV absorber, an antistatic agent, a dispersant, a chlorine scavenger, a flame retardant, a crystallization nucleating agent, an anticlouding agent, a pigment, an organic filler, a neutralizer, a decomposition agent, a metal deactivator, a pollution controlling material, an antibacterial agent, and other resins and thermoplastic elastomers can be given.

The method for adding the additives is not particularly limited. For example, a method of mixing the copolymer of the present invention with the additives using a mixers such as a Henschel mixer, a V blender, a ribbon blender, a tumbler blender, or a conical blender, and a method of melt mixing the mixture thus obtained using a uniaxial extruder, a biaxial extruder, or a kneader can be given. The temperature of the resin during melt mixing can be appropriately set usually in a range of 150 to 300°C, and preferably 190 to 250°C.

Due to excellent transparency, the molding material of the present invention is useful as a material for molding various formed products requiring transparency. In addition, the molding material of the present invention has excellent mechanical strength and anti-stress/cracking properties due to the possession of crystalline units.

The molding material of the present invention is suitably used as an optical material such as a lens, a prism, and an optical film; a medical material such as a syringe, a vial, and an infusion solution bag; various packing containers; and a vehicle material such as a mirror and a light cover.

### EXAMPLES

The present invention will be described in more detail by way of Examples and Comparative Examples, which should not be construed as limiting the present invention. In the examples, "parts" and "%" indicate "parts by weight" and "% by weight", respectively, unless otherwise specified.

The following tests and evaluations were conducted in the examples and the comparative examples.
(1) The weight average molecular weight (Mw) and the number average molecular weight (Mn) of polymers were measured as polystyrene standard by gel permeation chromatography (GPC) using tetrahydrofuran or chloroform as a solvent.
(2) The copolymerization ratio of polymers was determined by ¹H-NMR analysis.
(3) The hydrogenation rate of polymers was determined by ¹H-NMR analysis.
(4) Glass transition temperature (Tg), melting point (Tm), and heat of fusion (ΔH) were measured using a differential scanning calorimeter at a temperature increase rate of 10°C/ min.

### (Example 1)

A glass reactor of which the internal atmosphere was replaced with nitrogen was charged with 0.49 part of bis(tricyclohexylphosphine)benzylidene ruthenium (IV) dichloride dissolved in 28.3 parts of toluene, and further with 0.47 part of pyridine, and mixed. 4.5 parts of a 66% norbornene (NB) solution in toluene was added and polymerized at room temperature for one hour. A portion of the resulting polymerization reaction solution was sampled and analyzed by GPC to find that the polymer contained in the reaction solution had Mn of 9,100, Mw of 10,300, and Mw/Mn of 1.14.

35.0 parts of a 28.6% solution of 1,4-methno-1,4,4a,9a-tetrahydrofluorene (MTHF) in toluene was added to the polymerization reaction solution and the mixture was allowed to stand at room temperature for five days. After diluting the mixture with toluene, a large amount of methanol was added to completely precipitate the polymer, which was separated by filtration and after washing dried under vacuum at 40°C for 24 hours to obtain 8.1 parts of a copolymer (i). Mn and Mw of the copolymer (i) were respectively 24,600 and 31,700, and Mw/Mn was 1.29.

An autoclave equipped with a stirrer was charged with 5.0 parts of the copolymer (i) and 35 parts of toluene. Then, a hydrogenation catalyst solution in which 0.029 part of bis(tricyclohexylphosphine)benzylidene ruthenium (IV) dichloride and 0.025 part of ethyl vinyl ether were dissolved in 5 parts of toluene was added to hydrogenate the polymer under hydrogen pressure of 0.9 MPa at 120°C for 8 hours. The hydrogenation reaction solution was poured into a large amount of methanol to completely deposit the polymer, which was separated by filtration and after washing dried under vacuum at 40°C for 24 hours to obtain 5.0 parts of a copolymer (I). ¹H-NMR of the copolymer was measured to confirm that there were no peaks originating from a carbon-carbon double bond in the copolymer main chain and the main chain hydrogenation rate was 99% or more. On the other hand, the aromatic ring originating from MTHF was completely maintained. Mn of the copolymer (I) was 24,600, Mw was 31,600, Mw/Mn was 1.28, and the copolymerization ratio by weight of NB:MTHF was 25:75. Based on the fact that the resulting copolymer (I) was completely dissolved in toluene, it was confirmed that there was no NB homopolymer hydrogenate and the polymer was a copolymer of NB and MTHF.

The copolymer (I) was heat-pressed at 200°C and quenched to produce a molded board with a thickness of 1 mm. The molded board was transparent and the results of DSC measurement confirmed that the melting point (Tm) of the hydrogenation product unit of the NB ring-opening polymer was 106°C, heat of fusion (ΔH) was 9.4 J/g, and the glass transition temperature (Tg) of the hydrogenated MTHF ring-opening polymer unit was 127°C.
The above results confirmed that the copolymer (I) was a di-block copolymer of a crystalline hydrogenated NB ring-opening polymer unit (A) and a non-crystalline hydrogenated MTHF ring-opening polymer unit (B).

### (Example 2)

A glass reactor of which the internal atmosphere was replaced with nitrogen was charged with 4.5 parts of a 66% NB solution in toluene, 0.076 part of triisobutylaluminum dissolved in 5 parts of toluene, 0.0284 part of isobutyl alcohol dissolved in 5 parts of toluene, and 0.047 part of 1-hexene, and mixed. After the addition of 0.0126 part of tungsten hexachloride dissolved in 5 parts of toluene, NB was polymerized at 60°C for one hour. A portion of the resulting polymerization reaction solution was sampled and analyzed by GPC to find that the produced polymer had Mn of 5,500, Mw of 9,800, and Mw/Mn of 1.78.

Then, 35.0 parts of a 28.6% 5-phenyl-2-norbornene (PhNB) solution in toluene was added together with 0.0378 part of tungsten hexachloride dissolved in 10 parts of toluene, and polymerized at 60°C for two hours. After diluting the mixture with toluene, a large amount of methanol was added to completely precipitate the polymer, which was separated by filtration and after washing dried under reduced pressure at 40°C for 24 hours to obtain 12.5 parts of a copolymer (ii). Mn of the copolymer (ii) was 18,600, Mw was 38,200, and Mw/Mn was 2.05.

A hydrogenation reaction was carried out in the same manner as in Example 1, except for using 5.0 parts of the copolymer (ii) instead of 5.0 parts of the copolymer (i) to obtain copolymer (II). ¹H-NMR of the copolymer (II) was measured to confirm that there were no peaks originating from a carbon-carbon double bond in the copolymer main chain and the main chain hydrogenation rate was 99% or more. On the other hand, the aromatic ring originating from PhNB was completely maintained. Mn of the copolymer (II) was 19,000, Mw was 38,800, Mw/Mn was 2.04, and the copolymerization ratio by weight of NB:PhNB was 14:86. Based on the fact that the resulting polymer (II) was completely dissolved in toluene, it was confirmed that there was no NB homopolymer hydrogenate and the polymer was a copolymer of NB and PhNB.

The copolymer (II) was heat-pressed at 200°C and quenched to produce a molded board with a thickness of 1 mm. The molded board obtained was transparent and the results of DSC measurement confirmed Tm of the hydrogenated NB ring-opening polymer unit was 103°C, ΔH was 5.8 J/g, and Tg of the hydrogenated PhNB ring-opening polymer unit was 57°C. The above results confirmed that the copolymer (II) is a di-block copolymer of a crystalline hydrogenated NB ring-opening polymer unit (A) and a non-crystalline hydrogenated PhNB ring-opening polymer unit (B).

### (Comparative Example 1)

A glass reactor of which the internal atmosphere was replaced with nitrogen was charged with 0.49 part of bis(tricyclohexylphosphine)benzylidene ruthenium (IV) dichloride dissolved in 76.0 parts of toluene, and further with 0.47 part of pyridine, and mixed. 13.6 parts of a 66% NB solution in toluene was added and polymerized at room temperature for one hour. After diluting the mixture with toluene, a large amount of methanol was added to completely precipitate the polymer, which was separated by filtration and after washing dried under reduced pressure at 40°C for 24 hours to obtain 8.8 parts of an NB homopolymer (iiia). Mn of the polymer (iiia) was 29,700, Mw was 33,700, and Mw/Mn was 1.13.

A hydrogenation reaction was carried out in the same manner as in Example 1, except for using 5.0 parts of the polymer (iiia) instead of 5.0 parts of the polymer (i) to obtain 4.8 parts of a polymer (IIIa) which was a hydrogenated product ofNB homopolymer. The polymer (IIIa) was insoluble in tetrahydrofuran and chloroform at room temperature. The hydrogenation rate of the polymer (IIIa) was 99% or more, Tm was 138°C, and ΔH was 62.0 J/g.

Separately, homopolymerization of MTHF was carried out. A glass reactor of which the internal atmosphere was replaced with nitrogen was charged with 0.49 part of bis(tricyclohexylphosphine)benzylidene ruthenium (IV) dichloride dissolved in 59.0 parts of toluene, and further with 0.47 part of pyridine, and mixed. 15.0 parts of MTHF was added and polymerized at room temperature for 5 days. The resulting polymerization reaction solution was diluted with toluene and poured into a large amount of methanol to completely precipitate the polymer, which was separated by filtration and after washing dried under reduced pressure at 40°C for 24 hours to obtain 12.0 parts of an MTHF homopolymer (iiib). Mn of the polymer (iiib) was 37,600, Mw was 47,300, and Mw/Mn was 1.26.

A hydrogenation reaction was carried out in the same manner as in Example 1, except for using 5.0 parts of the polymer (iiib) instead of 5.0 parts of the copolymer (i) to obtain 4.7 parts of a polymer (IIIb) which was a hydrogenated product of MTHF homopolymer. Mn of the polymer (IIIb) was 39,500, Mw was 50,600, Mw/Mn was 1.28, and Tg was 139°C.

4 parts of the polymer (IIIa) and 6 parts of the polymer (IIIb) were added to 200 parts of a mixed solvent of cyclohexane and toluene in a ratio of 7:3, and dissolved by heating at 80°C while stirring. The solution was poured into a large amount of isopropyl alcohol to completely deposit the polymer, which was separated by filtration and after washing dried under reduced pressure at 40°C for 24 hours to obtain a polymer mixture.
With intention of preparing a board with a thickness of 1 mm, the polymer mixture was heat-pressed at 200°C and quenched. The board was cracked during preparation. There were spotted transparent areas and opaque white areas on the cracked board.

### (Example 3)

A glass reactor of which the internal atmosphere was replaced with nitrogen was charged with 10 parts of styrene (St), 30 parts of cyclohexane, and 0.052 part of n-butyl ether. 0.098 part of a 1.59 mol/l n-butyl lithium solution in n-hexane was added while cooling the reactor with ice to initiate polymerization. At one hour after start of the reaction, 0.018 part of allyl chloride was added to the reaction solution to terminate the reaction. The reaction mixture was diluted with cyclohexane and poured into a large amount of isopropanol to completely precipitate the polymer, which was separated by filtration and after washing dried under reduced pressure at 40°C for 24 hours to obtain 10 parts of polystyrene (V-PSt) having vinyl groups at the terminal.
Mn of the V-PSt was 55,600, Mw was 57,700, Mw/Mn was 1.04, and Tg was 100°C. ¹H-NMR of the V-PSt was measured to determine the rate of vinylated molecular chain terminals. It was found that 100% of the molecular chain terminals were vinylated.

A glass reactor of which the internal atmosphere was replaced with nitrogen was charged with 5.0 parts of V-PSt and 21 parts of cyclohexane to dissolve V-PSt in cyclohexane. Then, 1.5 parts of a 66% NB solution in toluene was added and the mixture was heated to 60°C. Next, 0.0018 part of (1,3-dimesitylimidazolidine-2-ylidene)(tricyclohexylphosphine)benzylidene ruthenium dichloride dissolved in 2.6 parts of toluene was added to initiate the polymerization. Although the viscosity of the polymerization reaction solution increased after the addition, the viscosity gradually decreased and the mixture became a fluid reaction solution after three hours. After the addition of 0.0015 part of ethyl vinyl ether, a portion of the reaction solution was sampled and analyzed by GPC and gas chromatography (GC). The GPC chart had two peaks, respectively indicating molecular weights of Mn = 130,800, Mw = 137,600, and Mn = 65,300, Mw = 68,900. Based on the fact that each peak was detected using a UV detector (280 nm) of GPC, both peaks were confirmed to contain a polystyrene unit. It was also confirmed by the GC analysis that NB was completely consumed.

The above results confirmed that the polymer obtained is a mixture of a tri-block copolymer having a polystyrene unit having a molecular weight of Mn = 55,600 bonded at both ends of an NB ring-opening polymer and a di-block copolymer having the same unit bonded to one of the ends. The molecular weight of the NB ring-opening polymer unit calculated from GPC was Mn = 19,600 in the tri-block copolymer and Mn = 9,800 in the di-block copolymer.

An autoclave equipped with a stirrer was charged with the polymerization reaction solution obtained above, and 0.0017 part of pyridine was added to hydrogenate the polymer under a hydrogen pressure of 4 MPa at 165°C for six hours. The reaction solution was poured into a large amount of isopropyl alcohol to completely deposit the polymer, which was separated by filtration and after washing dried under reduced pressure at 40°C for 24 hours to obtain 5.5 parts of a copolymer (IV). ¹H-NMR of the copolymer (IV) was measured to confirm that there were no peaks originating from a carbon-carbon double bond in the polymer main chain and the main chain hydrogenation rate was 99% or more. On the other hand, the aromatic ring originating from St was completely maintained. Two peaks of molecular weight of the copolymer (IV) were found, one, Mn = 130,900 and Mw = 137,800 and the other, Mn = 65,400 and Mw = 69,000. The copolymerization ratio by weight of NB:St was 8:92. Based on the fact that the resulting copolymer (IV) was completely dissolved in toluene, it was confirmed that there was no NB homopolymer hydrogenate and the polymer was a copolymer of NB and St.

The copolymer (IV) was heat-pressed at 200°C and quenched to prepare a board with a thickness of 1 mm. The board obtained was transparent and the results of DSC measurement confirmed that Tm of the hydrogenated NB ring-opening polymer unit was 119°C and ΔH was 1.1 J/g. Although Tg originating from a polystyrene unit was thought to be around 100°C, that Tg was not clearly observed because the point of temperature overlapped Tm of the hydrogenated NB ring-opening polymer unit. The above results confirmed that the copolymer (IV) was a block copolymer of a crystalline hydrogenated NB ring-opening polymer unit (A) and a non-crystalline polystyrene unit (B).

### (Comparative Example 2)

One part of the polymer (IIIa), which is the hydrogenated product ofNB homopolymer obtained in Comparative Example 1, and 9 parts of V-PSt obtained in Example 2 were added to 200 parts of cyclohexane, and dissolved by heating at 80°C while stirring. The solution was poured into a large amount of isopropyl alcohol to completely deposit the polymer, which was separated by filtration and after washing dried under reduced pressure at 40°C for 24 hours to obtain a polymer mixture.
With intention of preparing a board with a thickness of 1 mm, the polymer mixture was heat-pressed at 200°C and quenched. The board was cracked during preparation. There were spotted transparent areas and opaque white areas on the cracked board.

### (Example 4)

The polymerization was carried out in the same manner as in Example 1, except for using 0.50 part of a ruthenium compound of the following formula (3) dissolved in 28 parts of toluene instead of 0.49 part of bis(tricyclohexylphosphine)benzylidene ruthenium (IV) dichloride dissolved in 28.3 parts of toluene. The ruthenium compound shown by the formula (3) was synthesized according to the description of non-patent document 5. A portion of the resulting polymerization reaction solution was sampled and analyzed by GPC to find that the produced polymer had Mn of 9,700, Mw of 11,200, and Mw/Mn of 1.15.

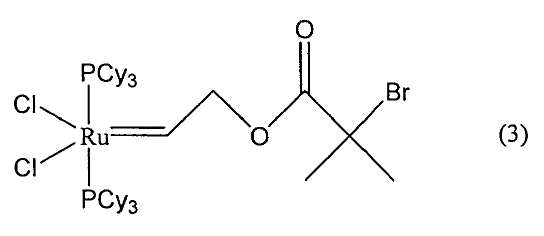

wherein Cy represents a cyclohexyl group.
35.0 parts of a 28.6% t-butyl methacrylate (tBMA) in toluene was added to the polymerization reaction solution and polymerized at 65°C for one day. The reaction solution was diluted with toluene and poured into a large amount of methanol to completely precipitate the polymer, which was separated by filtration and after washing dried under reduced pressure at 40°C for 24 hours to obtain 7.8 parts of a copolymer (v). Mn and Mw of the copolymer (v) were respectively 28,200 and 44,900, and Mw/Mn was 1.59.

A hydrogenation reaction was carried out in the same manner as in Example 1, except for using 5.0 parts of the copolymer (v) instead of 5.0 parts of the copolymer (i) to obtain copolymer (V). ¹H-NMR of the copolymer (V) was measured to confirm that there were no peaks originating from a carbon-carbon double bond in the copolymer main chain and the main chain hydrogenation rate was 99% or more. Mn of the copolymer (V) was 28,800, Mw was 45,100, Mw/Mn was 1.57, and the copolymerization ratio by weight of NB:tBMA was 27:79. Based on the fact that the resulting copolymer (V) was completely dissolved in toluene, it was confirmed that there was no NB homopolymer hydrogenate and the polymer was a copolymer of NB and tBMA.

The copolymer (V) was heat-pressed at 200°C and quenched to produce a molded board with a thickness of 1 mm. The molded board obtained was transparent and the results of DSC measurement confirmed that Tm of the hydrogenated NB ring-opening polymer unit was 106°C, ΔH was 9.8 J/g, Tg of the tBMA unit was 128°C. The above results confirmed that the copolymer (V) was a block copolymer of a crystalline hydrogenated NB ring-opening polymer unit (A) and a non-crystalline tBMA polymer unit (B).

### (Example 5)

A glass reactor of which the internal atmosphere was replaced with nitrogen was charged with 80 parts of toluene, 0.67 part of allyl methacrylate, and 15.2 parts of 66% NB solution in toluene. The mixture was heated to 60°C.
Next, 0.0090 part of (1,3-dimesitylimidazolidine-2-ylidene)(tricyclohexylphosphine)benzylidene ruthenium dichloride dissolved in 5.0 parts of toluene was added to initiate the polymerization. Although the viscosity of the polymerization reaction solution increased after the addition, the viscosity gradually decreased and the mixture became a fluid reaction solution after three hours. The polymerization reaction solution was poured into a large amount of methanol to completely deposit the polymer, which was separated by filtration and after washing dried under reduced pressure at 40°C for 24 hours to obtain 10.0 parts of a polymer. Based on the fact that a peak originating from a methacryloyl group was observed in the ¹H-NMR chart, the resulting polymer was an NB ring-opening polymer having a methacryloyl group at the terminal. Mn of the polymer was 2,200, Mw was 3,800, and Mw/Mn was 1.73.

A glass reactor of which the internal atmosphere was replaced with nitrogen was charged with 2.0 parts of NB ring-opening polymer having a methacryloyl group at the end obtained above and dissolved in 80 parts of toluene. 8.0 parts of tBMA was added and the mixture was heated at 70°C. After the addition of 0.10 part of azobisisobutyronitrile dissolved in 5.0 parts of toluene, and polymerized for eight hours. The polymerization reaction solution was poured into a large amount of methanol to completely deposit the polymer, which was separated by filtration and after washing dried under reduced pressure at 40°C for 24 hours to obtain 9.0 parts of a copolymer (vi). As a result of GPC measurement of the copolymer (vi), no peak was observed in the neighborhood of the molecular weight of 2,200, but one peak indicating Mn = 18,600 and Mw = 42,100 was detected, confirming that almost 100% of the NB ring-opening polymer having a methacryloyl group at the terminal copolymerized with tBMA.

A hydrogenation reaction was carried out in the same manner as in Example 1, except for using 5.0 parts of the copolymer (vi) instead of 5.0 parts of the copolymer (i) to obtain 5.0 parts of a copolymer (VI). ¹H-NMR of the copolymer (VI) was measured to confirm that there were no peaks originating from a carbon-carbon double bond in the copolymer main chain and the main chain hydrogenation rate was 99% or more. Mn of the copolymer (VI) was 18,800, Mw was 42,500, and the copolymerization ratio by weight of NB:tBMA was 19:81. Based on the fact that the resulting copolymer (VI) was completely dissolved in toluene, it was confirmed that there was no NB homopolymer hydrogenate and the polymer was a copolymer of NB and tBMA.

The copolymer (VI) was heat-pressed at 200°C and quenched to produce a molded board with a thickness of 1 mm. The molded board obtained was transparent and the results of DSC measurement confirmed that Tm of the hydrogenated NB ring-opening polymer unit was 102°C, ΔH was 4.5 J/g, and Tg originating from the tBMA unit was 128°C. The above results confirmed that the copolymer (VI) was a graft copolymer of a crystalline hydrogenated NB ring-opening polymer unit (A) and a non-crystalline tBMA polymer unit (B).

As described above, it can be understood that the block copolymers and graft copolymers obtained in Examples 1 to 5 are thermoplastic resins exhibiting excellent transparency, heat resistances, and mechanical strength.

### INDUSTRIAL APPLICABILITY

According to the present invention, a novel thermoplastic resin exhibiting excellent transparency, heat resistances, and mechanical strength can be provided. Utilizing these excellent characteristics, the thermoplastic resin of the present invention can be suitably used for producing various molded products such as an optical material, a medical material, and various packing containers, and vehicle materials.

## Claims

1. A thermoplastic resin comprising a block copolymer or a graft copolymer possessing (A) a crystalline hydrogenated norbornene ring-opening polymer unit and (B) a non-crystalline polymer unit having a glass transition temperature of 40 to 300°C.

2. The thermoplastic resin according to claim 1, wherein the non-crystalline polymer unit (B) is a unit (B1) which is obtained by ring-opening polymerization of a norbornene monomer having three or more rings and hydrogenating the resulting polymer.

3. The thermoplastic resin according to claim 1, wherein the non-crystalline polymer unit (B) is a unit (B2) which is an aromatic vinyl polymer unit or a unit obtained by hydrogenating the aromatic ring thereof.

4. The thermoplastic resin according to claim 1, wherein the non-crystalline polymer unit (B) is an acrylate polymer unit (B3).

5. A method for producing the thermoplastic resin according to any one of claims 1 to 4, comprising hydrogenating a block copolymer or a graft copolymer possessing a norbornene ring-opening polymer unit (C) and a polymer unit (D) which is converted into the non-crystalline polymer unit (B) after hydrogenation, in the presence of a hydrogenation catalyst.

6. The method according to claim 5, wherein the norbornene ring-opening polymer unit (C) is produced by living ring-opening metathesis polymerization of norbornene or a mixture of norbornene and a monomer copolymerizable with the norbornene by ring-opening polymerization.

7. A molding material comprising the thermoplastic resin according to any one of claims 1 to 4.
